# EUROPÄISCHE PATENTANMELDUNG

(11) **EP 0 743 206 A2**
(43) Veröffentlichungstag der Anmeldung: **20.11.1996**
(21) Anmeldenummer: 96250104.5
(22) Anmeldetag: 09.05.1996
(51) Int. Cl.: B60H 1/22

(54) **Heizanordnung zur Erwärmung von diese umgebende Medien**

(30) Priorität: 16.05.1995 DE 19519126
(71) Anmelder: Dolder, Urs, 4614 Hägendorf (CH); Dolder, Christian, 4614 Hägendorf (CH)
(72) Erfinder: Dolder, Urs, 4614 Hägendorf (CH); Dolder, Christian, 4614 Hägendorf (CH)
(74) Vertreter: Henze, Lothar

(57) **Zusammenfassung**

Heizanordnung zur Erwärmung von diese umgebenden Medien, bei der der Heizleiter von den Medien durch elektrisch isolierende Materialien und durch metallische Wandungen getrennt ist, und bei der ein gestreckter oder gewendelter metallischer Heizleiter (1) mit folgenden aufeinander folgenden Materialien umgeben ist:
- eine Schicht elektrisch isolierenden Materials (2)
- ein metallischer elektrisch leitender Mantel (3)
- eine Schicht elektrisch isolierenden Materials (4)
- ein metallischer Mantel (5),

Die Erfindung ist dadurch gekennzeichnet dadurch gekennzeichnet,
daß in der inneren elektrisch isolierenden Schicht (2) zur besseren Trennung des Heizleiters Keramikformteile (9), Brechrohre, Verglühteile oder Weichisolierröhrchen aus Mg0 (10) eingelegt sind,:
daß der innere metallische Mantel (3) zur Verdichtung des inneren elektrischen isolierenden Materials (2) durch mechanische Bearbeitung in seinem Durchmesser reduziert ist, und
daß der innere metallische Mantel (3) als Zwischen- oder Sicherheitsmasse dient und an eine Quelle zur Übertragung von elektrischen Potentialen oder Signalimpulsen anschließbar ist.

## Beschreibung

Die Erfindung betrifft eine Heizanordnung zur Erwärmung von diese umgebenden Medien und speziell einen Wärmetauscher zur Erwärmung von Wasser zur Beheizung von elektromotorisch angetriebenen Pneufahrzeugen.

Die Besonderheit dieser Fahrzeuge gegenüber Schienenfahrzeugen hinsichtlich der Isolation elektrischer Einrichtungen soll durch einen Vergleich kurz erläutert werden.

Bei Schienenfahrzeugen weisen elektrische Einrichtungen eine einfache Isolation auf, ohne Nachweis eines Isolationswiderstandes, jedoch mit der verbindlichen Auflage, daß die äußere, berührbare Verschalung schlüssig und mit dem den Vorschriften entsprechenden Querschnitt an die Bahnerdung gelegt sein muß.

Bei Schienenfahrzeugen ist die »Schutzerdung« über die Räder und die Schienen am Boden ohne Probleme zu bewektstelligen.

Pneufahrzezuge mit nur verbrennungsmotorischem Antrieb weisen hinsichtlich der Innenraumheizung ebenfalls keine elektrischen Isolationsprobleme auf, da bei diesen zur Heizung die Erwärmung der Verbrennungsmotore ausgenutzt wird.

Anders ist das bei Pneufahrzeugen mit nur elektromotorischem oder mit verbrennungs- und elektromotorischem Antrieb, sog. Hybridantrieb.

Hier ist für die elektrischen Einrichtungen eine Schutzerdung wegen der Pneubereifung und demzufolge ungenügenden Leitwerten zu den Straßenbelägen nicht möglich. Zum Schutz der Fahrgäste, des Personals ebenso wie der übrigen Straßenbenutzer sind deshalb spezielle Sicherheitsmaßnahmen erforderlich.

Der Gesetzgeber verlangt deshalb in einschlägigen Vorschriften eine überwachbare »Zwischen- oder Sicherheitsmasse«.

Bislang wurden beispielsweise Trolleybusse (Oberleitungsbusse) realisiert, indem man lediglich einen leeren Chassisunterbau eines Autobusses mit allen elektrischen Antriebs- und Hilfsorganen ausrüstete und eine entsprechende Karosserie um das Ganze herumbaute.

Die Tendenz läuft heute in die Richtung, einen möglichst kompletten Autobus oder Gelenkautobus fertig karossiert, mit allen aus der Großserie verwendbaren Hilfsbetrieben, z. B. auch die Warmwasserheizgeräte im Fahrgastraum, möglichst unverändert zu elektrifizieren. Das bedeutet, diese Fahrzeuge sowohl mit elektrischem Antrieb als auch mit den erforderlichen elektrischen Hilfsbetrieben auszurüsten.

Der Duobus ist ebenfalls ein Fahrzeug, das in die gleiche Entwicklungsrichtung weist, da bei demselben zur normalen Autobusausrüstung mit Diesel-, oder Gasantriebsmotor mit Warmwasserheizungsausrüstung im Fahrgastraum zusätzlich ein Elektroantriebsmotor für den Verkehr in Stadtnetzen, mit Stromversorgung aus der Oberleitung, eingebaut wird. Somit können diese Fahrzeuge im Stadtverkehr elektrisch betrieben und im Agglomerationsbereich mittels Diesel- oder Gasmotor eingesetzt werden.

Während des Elektrofahrbetriebs fällt die Abwärme des Diesel-, oder Gasantriebes weg und muß deshalb für die Fahrgastraumbeheizung, ebenso wie bei den O-Bussen der neuen Tendenz, durch eine elektrische Wärmequelle für das Warmwasserheizsystem ersetzt werden.

Zu diesem Zweck sind verschiedene Heizsysteme bekannt. Diese Geräte weisen allerdings einen sehr schlechten Wärmeübergang auf das zu erwärmende Medium auf, da sie wegen der Forderung der doppelten Isolation und der »Zwischenmasse« entweder mit z. B. silikonumgossenen Heizwicklungen oder mit elektrisch isolierendem Transformatorenöl als Zwischenwärmeträger arbeiten.

Durch den sehr schlechten Wäremübergang von der Heizwicklung auf das zu erwärmende Wasser über die thermisch schlecht leitenden elektrischen lsolationsmedien Silikon oder Öl. tendieren diese Systeme zum Überhitzen und bedingen dadurch aufwendige und komplizierte Steuerungen. Diese Systeme weisen demzufolge auch eine entsprechende kleine Energiedichte, bezogen auf ihr Volumen, auf.

Der Erfindung lag somit die Aufgabe zugrunde, eine elektrische Heizanordnung, speziell einen Wärmetauscher für Pneufahrzeuge, zu schaffen, wobei zu verhindern war, daß in dem Falle, daß der Heizleiter durch Überhitzung, Unfalleinflüsse oder Uberalterung bricht und dadurch möglicherweise mit dem Metallmantel in Berührung kommt, eine gefährdende Spannung auf das die Heizanordnung umgebende zu erwärmende Medium, z. B. Wasser, abgegeben wird und bei dem gegenüber den bisher bekannten Systemen ein um das Vielfache besserer Wäremübergang auf das zu erwärmende Medium erfolgt.

Die Lösung der Aufgabe erfolgt in erfinderischer Weise entsprechend den Merkmalen des Patentanspruchs 1, die Unteransprüche stellen zweckmäßige Weiterbildungen der Merkmale des Hauptanspruchs dar.

Mehrere Ausführungsformen der erfindungsgemäßen Heizanordnung sollen anhand der Zeichnungen näher erläutert werden:

In den Zeichnungen zeigen:
- Fig. 1:: einen Längsschnitt durch eine gestreckt ausgebildete Heizanordnung mit zweiseitigem elektrischen Anschluß
- Fig. 2:: einen Querschnitt gemäß der Linie A-A in Fig. 1.
- Fig. 3:: einen Längsschnitt durch eine gestreckt ausgebildete Heizanordnung mit einseitigem elektrischen Anschluß
- Fig. 4:: einen Querschnitt gemäß der Linie A-A in Fig. 3
- Fig. 5:: einen Längsschnitt durch eine gestreckt ausgebildete Heizanordnung mit mehreren Heizleitern, einseitigem elektrischen Anschluß und halbseitig unterschiedlichem Aufbau der inneren Isolation
- Fig. 6:: einen Querschnitt gemäß der Linie A-A in Fig. 5.

Ein metallischer Heizleiter 1 aus NiCr in einem von Wasser 8 umgebenen Wärmetauscher eines Pneufahrzeuges ist in der gestreckt ausgeführten Heizanordnung einfach geführt, d. h. seine Anschlußenden 6 treten an beiden Enden der Heizanordnung aus und werden dort an die Heizspannung angeschlossen. Der Heizleiter 1 ist mit einem mechanisch verdichteten, elektrisch isolierenden Medium 2, z. B. Mg0, umgeben.

Um das isolierende Material 2 ist ein metallischer Mantel 3 angeordnet. Dieser Metallmantel 3 ist zur Verdichtung des isolierenden Materials 2 durch Hämmern im Durchmesser reduziert. Der Metallmantel 3 dient als Zwischen- oder Sicherheitsmasse für den Fall, daß der Heizleiter durch mechanische Einwirkung oder durch Alterung des lsoliermaterials mit dem umgebenden Metallmantel elektrisch kontaktiert und ist im Fahrzeug entsprechend den Vorschriften gegenüber der Fahrzeugmasse isoliert geführt. Es ist dadurch auch möglich, an den Metallmantel 3 Meß-, Prüf- oder andere Signalspannungen anzulegen.

Der rohrförmige Metallmantel 3 ist an seinen Enden durch die Endstücke 7, durch die der Heizleiteranschluß 6 geführt ist, dichtend abgeschlossen.

Der Metallmantel 3 ist von einer weiteren Schicht 4 aus elektrisch isolierendem Material, z. B. Mg0, das verdichtet sein kann, umgeben. Den äußeren Abschluß zu dem zu erwärmenden Wasser 8 bildet der metallische Mantel 5.

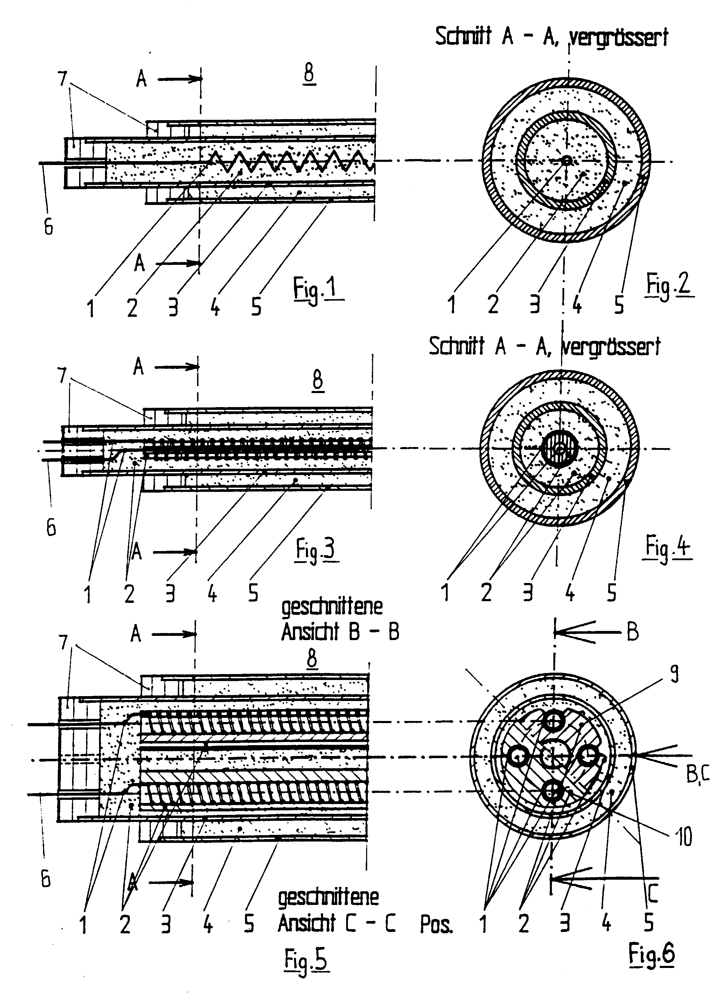

Die Figuren 3 und 4 zeigen eine Ausführungsform der Heizanorndung mit gewendelt ausgeführtem Heizleiter 1, bei der die elektrischen Anschlüsse 6 an nur einem Ende der Heizanordnung herausgeführt sind. Der übrige Aufbau entspricht dem nach Fig. 1

In den Figuren 5 und 6 ist eine Ausführungsform angegeben, bei der vier miteinander elektrisch verbundene gewendelte Heizleiter 1 über den Umfang der Heizanorndung gleichmäßig verteilt angeordnet sind. Die elektrischen Anschlüsse 6 der Gesamtanordnung sind einseitig herausgeführt. Das innere Isoliermaterial 2 ist im Schnitt der Ansicht C-C Weichisolierrohr 10 aus Mg0. Im Schnitt der Ansicht B-B sind zusätzlich Keramikformteile 9 eingelegt.

Das beschriebene System weist gegenüber denen mit Silikon oder Öl als Isoliermaterial einen um das Vielfache besseren Wärmeübergang und entsprechend eine um das Vielfache größere Energiedichte, bezogen auf sein Volumen , auf. Das System ist nicht überhitzungsgefährdet und dadurch entsprechend einfach zu regeln und günstig in der Herstellung.

Außerdem erfolgt die Wärmeübertragung vom Heizleiter auf das zu erwärmende Medium, z. B. Wasser, für die Beheizung des Fahrzeuginnern, ohne die Verwendung eines möglicherweise brennbaren Zwischenmediums.

## Patentansprüche

1. Heizanordnung zur Erwärmung von diese umgebenden Medien. bei der der Heizleiter von den Medien durch elektrisch isolierende Materialien und durch metallische Wandungen getrennt ist, und bei der ein gestreckter oder gewendelter metallischer Heizleiter (1) mit folgenden aufeinander folgenden Materialien umgeben ist:
- eine Schicht elektrisch isolierenden Materials (2)
- ein metallischer elektrisch leitender Mantel (3)
- eine Schicht elektrisch isolierenden Materials (4)
- ein metallischer Mantel (5),
dadurch gekennzeichnet.
daß in der inneren elektrisch isolierenden Schicht (2) zur besseren Trennung des Heizleiters Keramikformteile (9), Brechrohre, Verglühteile oder Weichisolierröhrchen aus Mg0 (10) eingelegt sind:
daß der innere metallische Mantel (3) zur Verdichtung des inneren elektrischen isolierenden Materials (2) durch mechanische Bearbeitung, wie Hämmern, Walzen oder Pressen, in seinem Durchmesser reduziert ist, und
daß der innere metallische Mantel (3) als Zwischen- oder Sicherheitsmasse dient und an eine Quelle zur Übertragung von elektrischen Potentialen oder Signalimpulsen anschließbar ist.

2. Heizanordnung nach Anspruch 1,
dadurch gekennzeichnet,
daß diese eine gestreckte oder gebogene Form aufweist und daß der Heizleiter (1) einfach geführt ist, so daß dessen elektrische Anschlüsse (6) auf beide Enden der Heizanordnung verteilt sind oder daß der Heizleiter (1) doppelt oder mehrfach über die Länge der Heizanordnung geführt ist und daß dessen elektrische Anschlüsse (6) an einem Ende der Heizanordnung angeordnet sind.

3. Heizanordnung nach einem der Ansprüche 1 oder 2,
dadurch gekennzeichnet,
daß der Heizleiter (1) aus NiCr, FeCrAl oder NiCrFe besteht.

4. Heizanordnung nach einem der Ansprüche 1 bis 3,
dadurch gekennzeichnet.
daß das elektrisch isolierende Material (2, 4) aus Mg0, Al₂0₃ oder Si0₂ besteht.

5. Heizanordnung nach Anspruch 4,
dadurch gekennzeichnet.
daß das elektrisch isolierende Material (2, 4) verdichtet ist.

6. Heizanordnung nach einem der Ansprüche 1 bis 5,
dadurch gekennzeichnet,
daß diese in Kraftfahrzeugen, sowohl in Fahrzeugen mit nur elektromotorischem als auch in Fahrzeugen mit elektromotorischem und verbrennungsnmotorischem Antrieb, eingesetzt ist.
